(19) Europäisches Patentamt
European Patent Office
Office européen des brevets

(11) **EP 2 884 403 A1**

(12) **EUROPEAN PATENT APPLICATION**
published in accordance with Art. 153(4) EPC

(43) Date of publication:
**17.06.2015 Bulletin 2015/25**

(51) Int Cl.:
***G06F 17/10*** *(2006.01)*

(21) Application number: **13827706.6**

(22) Date of filing: **08.08.2013**

(86) International application number:
**PCT/ES2013/070586**

(87) International publication number:
**WO 2014/023871 (13.02.2014 Gazette 2014/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.08.2012 ES 201231286**

(71) Applicant: **Universidade de Santiago de Compostela**
**15782 Santiago de Compostela (ES)**

(72) Inventors:
• **DÍAZ BRUGUERA, Javier**
**E-15782 Santiago de Compostela (ES)**
• **VÁZQUEZ ÁLVAREZ, Álvaro**
**E-15782 Santiago de Compostela (ES)**

(74) Representative: **Juncosa Miro, Jaime et al**
**Torner, Juncosa i Associates, S.L.**
**Gran Via de les Corts**
**Catalanes, 669 bis, 1o, 2a**
**08013 Barcelona (ES)**

(54) **APPARATUS AND METHOD FOR CALCULATING EXPONENTIATION OPERATIONS AND ROOT EXTRACTION**

(57)     An apparatus for general powering computation is disclosed. The apparatus is capable of computing a powering function of a floating-point number with an unrestricted exponent. The unrestricted exponent can be a fixed-point or a floating-point exponent. Additionally, the unrestricted exponent can be an inverse of a number in order to enable for q-th root computation using the same hardware processor and architecture.

FIG.2

**Description**

**FIELD OF THE INVENTION**

Disclosed embodiments relate to computational apparatuses and methods. Specifically, disclosed embodiments are related to apparatuses, architectures, and methods for general powering computation.

**BACKGROUND**

The design of functional units for the computation of powering and q-th roots ($X^z$, Z=p or Z=1/q, where p, q are integers) has been a challenging task for years. The powering and q-th root extraction is used frequently in required operations in the fields of computer graphics, digital signal processing, and scientific computation. This includes the computation of square root ($X^{1/2}$), inverse square root ($X^{-1/2}$), cubic root ($X^{1/3}$), inverse cubic root ($X^{-1/3}$), squaring ($X^2$), inverse squaring ($X^{-2}$), reciprocal ($X^{-1}$), exponential ($2^Y$ or $e^Y$), and some other less frequent but also important functions.

There are a number of architectures for the computation of the exponential and logarithm; however accurately computing the floating-point powering functions and the root extraction is difficult. The prohibitive hardware requirements of a table-based implementation and the high intrinsic complexity of digit-recurrence based algorithms have lead only to partial solutions, such as powering or root extraction for a constant exponent or for very low precision. The traditional approximation to powering and q-th root extraction has been the development of functional units for the computation of a given power or root. Accordingly, there is a number of algorithms and implementations for the most frequent exponents, reciprocal, square root and the inverse square root calculation, including linear convergence digit-recurrence algorithms and quadratic convergence multiplicative-based methods, such as Newton-Raphson and Goldschmidt algorithms. There are also several approaches for the calculation of other exponents derived from the application of general methods for function evaluation to the case of powering.

In general, in the calculation of a powering or a q-th root with very low precision it is possible to employ direct table look-up, but its high memory requirements make it an inefficient method for single- or double-precision floating point formats. Polynomial and rational approximations are another way of implementing the powering and q-th root extraction. However, one of the most efficient methods in floating-point representation is table-driven algorithms, which are halfway between direct table look-up and polynomial and rational approximations. The use of a polynomial approximation allows the table size to be reduced and the table look-up allows us to reduce the degree of the polynomial.

There are first and second order polynomial approximation based on a Taylor expansion for the calculation of a limited number of powers and roots, square root, reciprocal square root, fourth root, etc., such as those described in Powering by a Table Look-Up and a Multiplication with Operand Modification by N. Takagi, IEEE Transactions on Computers, vol. 47, no. 11, pp. 1216-1222, November 1998; Faithful Powering Computation Using Table Lookup and Fused Accumulation Tree by J. A. Piñeiro, J. D. Bruguera and J. M. Muller, Proceedings 15th IEEE Symposium on Computer Arithmetic, pp. 40-47, June 2001; and High-performance architectures for elementary function generation by J. Cao, B. W. Y. Wei and J. Cheng, Proceedings 15th IEEE Symposium on Computer Arithmetic, pp. 136-144, June 2001, but those implementations require to replicate the table to store the coefficients and cannot be considered as general q-th root calculations units.

A digit-recurrence method for the q-th root extraction has been presented in An Digit-by-Digit Algorithm for m-th Root Extraction by P. Montuschi, J. D. Bruguera, L. Ciminiera and J. A. Piñeiro, IEEE Transactions on Computers, vol. 56, no. 12, pp. 1696-1706, December 2007, and particularized to the radix 2 cube root computation in A Radix-2 Digit-by-Digit Architecture for Cube Root by A. Piñeiro, J. D. Bruguera, F. Lamberti, P. Montuschi IEEE Transactions on Computers, vol. 57, no. 4, pp. 562-566, April 2008. The complexity of the resulting architecture depends on q, such as the larger q the larger the complexity. Consequently, the architecture for the computation of large q-th roots is difficult to implement. There are also some other specific digit-recurrence implementations for both square and cube root computations presented in Digit-by-Digit Methods for Computing Certain Functions by M. D. Ercegovac, 41st Asilomar Conference on Signals, Systems and Computers, pp. 338-342, November 2007; and A Digit-Recurrence Algorithm for Cube Rooting by N. Takagi, IEICE Transactions on Fundamentals of Electronics, Communications and Computer Sciences, vol. E84-A, no. 5, pp. 1309-1314, May 2001.

It has to be pointed out that all the methods outlined above for the powering computation and q-th root extraction are targeted for a given exponent. That means that the resulting architecture cannot be used for the calculation of a power or root different to that it has been designed for. To adapt the architecture to a different power or root requires to change the lookup tables in the case of table-driven polynomial approximations' or to design a completely new architecture, in the case of the digit-recurrence method. The table-driven polynomial approximations can be adapted to compute more than just one power or root, but this needs the replication of the lookup tables. In any case, the methods above cannot be considered as general methods for the calculation of any power or q-th root.

The only architecture in the literature for the q-th root extraction for any q is described in Algorithm and Architecture for Logarithm, Exponential and Powering Computation by J. A. Piñeiro, M. D. Ercegovac and J. D. Bruguera, IEEE Transactions on Computers, vol. 53, no. 9, pp. 1085- 1096, September 2004, and was designed for the computation of the powering function $X^p$, with p any integer, based on a logarithm-multiplication-exponential chain implementation speeded-up by using redundancy and online arithmetic, and extended to the computation of $X^{1/q}$. However, the extended architecture for the q-th root extraction is hard to implement, because in addition to the operations in the chain, it includes an integer division and requires the calculation of the remainder of the division.

## SUMMARY OF THE INVENTION

Disclosed embodiments include an apparatus for general powering computation that comprises (a) a plurality of memory elements; and (b) a hardware processor configured to compute the powering function $X^Z$ of a floating-point number X, wherein Z is an unrestricted exponent. The unrestricted exponent can be a fixed-point or a floating-point exponent. Additionally, the unrestricted exponent can be an inverse of a number to enable for q-th root computation as part of the same hardware processor. According to one embodiment, the hardware processor comprises a multiplexing unit, a reciprocal unit, a logarithm unit, an exponential unit, a multiplication unit, a shifter unit, or combinations thereof. The reciprocal unit, logarithm unit, and multiplication unit are configured to perform computations contemporaneously, and the exponential unit is configured to perform computations in an on-line basis. In a particular embodiment, and without limitation, the reciprocal, logarithm, and multiplication units are configured to perform computations in a most significant-digit first basis. Disclosed embodiment also includes methods for performing general powering computation.

## BRIEF DESCRIPTION OF THE FIGURES

Disclosed embodiments are illustrated by way of example, and not by way of limitation, in the figures of the accompanying drawings.

FIG. 1 is a sequence of operations to compute the powering function $X^Z$ with a fixed-point exponent Z according to one embodiment.

FIG. 2 is a block diagram of a processor for performing the powering calculation, $X^Z$ with a fixed-point exponent Z according to one embodiment.

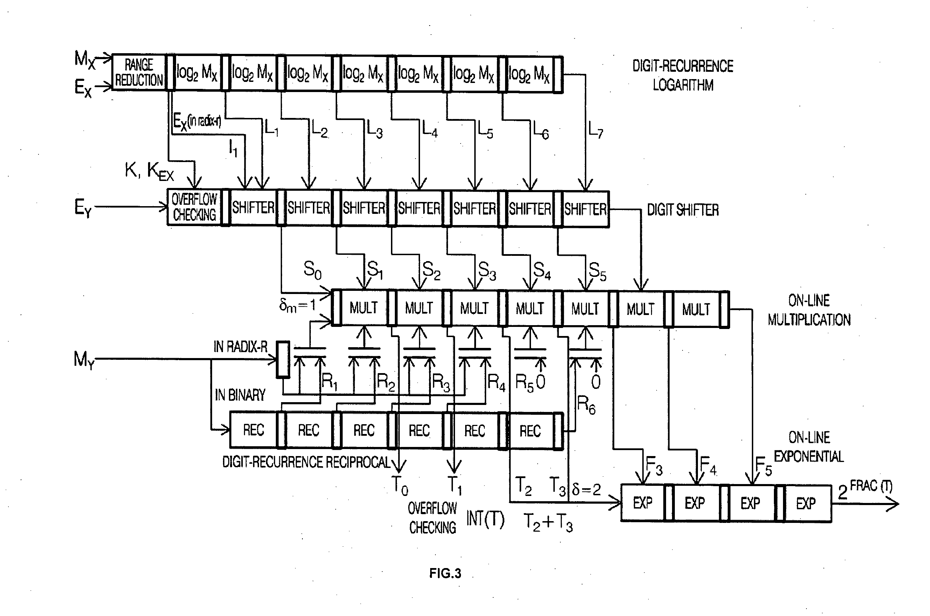

FIG.3 is a sequence of operations to compute the $X^Y$ and $X^{1/Y}$, being X and Y single-precision floating-point numbers according to one embodiment.

FIG. 4 is a method for shifting the logarithm according to one embodiment.

FIG. 5 is a block diagram of a processor for performing the powering calculation $X^Z$ with a fixed-point or floating point exponent Z according to one embodiment.

FIG. 6 is an example of parameters for powering computation and root extraction with fixed-point exponent, number of bits of the intermediate results and latencies, using a radix r=128 and simple and double precision results.

FIG. 7 is an example of parameters for powering computation and root extraction with floating-point exponent, number of bits of the intermediate results and latencies, using a radix r=128 and simple and double precision results.

## DETAILED DESCRIPTION OF THE INVENTION

Microprocessors have a general structure to deal with common operations, such as memory access, software instruction execution, peripheral control, and arithmetic calculations. The complexity of some operations such as the square root, cubic root, and inverse does not allow incorporating a specific hardware to compute these operations within the microprocessor. Consequently, current microprocessors incorporate floating point units (FPUs) to carry out complex operations such as square root or division of floating point numbers. However, the functionality of FPUs is limited as they cannot implement a large number of operations and complex operations must be carried out using a software solution. The software solution degrades the overall performance of the system as it slows down the computations. Disclosed embodiments include an apparatus that implements qth-roots and general powering computations.

Disclosed embodiments, and without limitation, include methods and apparatuses for the powering computation and the root extraction $X^Y$, X and Y being floating-point numbers, $X = (-1)^{s_x} \times M_x \times 2^{E_x}$ and $Y = (-1)^{s_z} \times M_y \times 2^{E_y}$, $M_x$ and $M_y$ being the n-bit significands (i.e., the n bits of the significand include the hidden bit, and least-significant bit (LSB) has a weight 2-$^{(n-1)}$) and $E_x$ and $E_y$ the $n_{Ex}$-bit signed exponents, or Y being a $n_y$+1 bit fixed-point exponent of the form

$$Y = \begin{cases} y & \text{in powering computation} \\ 1/y & \text{in root extraction} \end{cases}$$

being $y$ a signed integer operand of $ny+1$ bits, with $|y| \geq 2$ for root extraction.

## A. Apparatus for a Fixed-Point Exponent

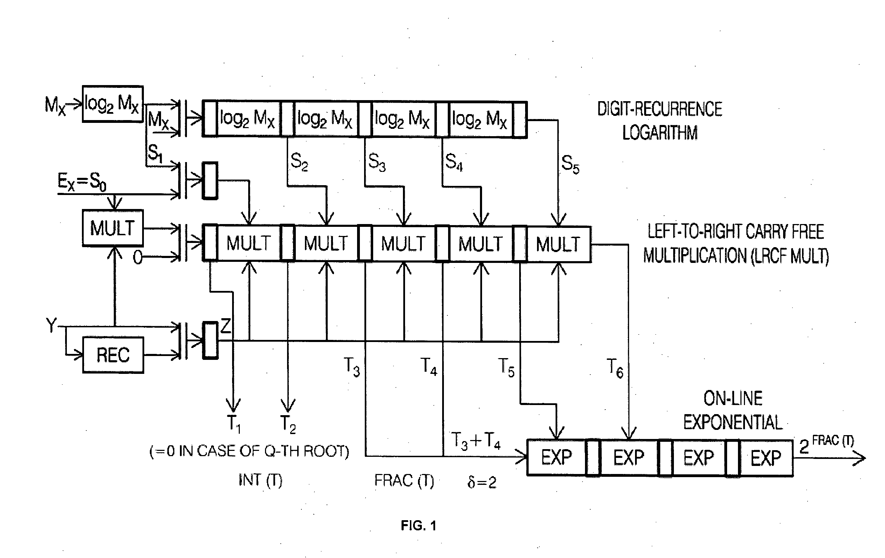

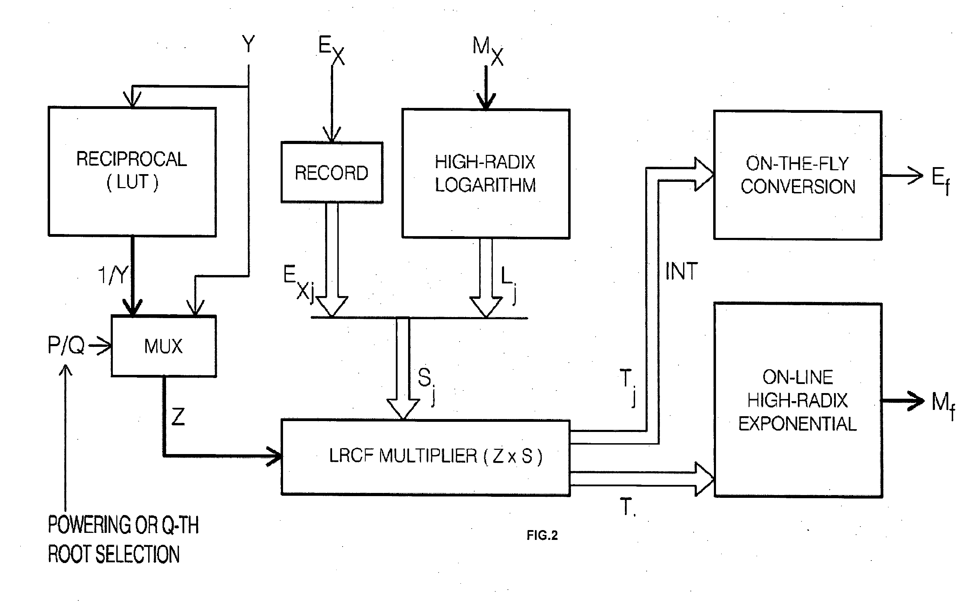

According to a particular embodiment, and without limitation, the apparatus for computing Z-th powering or Z-th root of a number X comprises: (a) a plurality of memory elements such as registers, for storing a number X whose Z-th powering or Z-th root is to be computed, a fixed-point number Z that indicates the powering or root exponent, the number of significant bits of the number X and of the resulting computation, the operation being performed, computing Z-th powering or Z-th root and the former exponent of Z; (b) a reciprocal unit for computing the reciprocal of Z resulting in a number A; (c) a logarithm unit for computing the logarithm base 2 of the number X resulting in a number B; (d) a multiplication unit for computing the product of said numbers A and B resulting in a number C; (e) an exponential unit for computing the exponential of said number C, thus obtaining the operation result. In particular embodiments, the reciprocal unit operates in parallel with the logarithm unit, the logarithm unit and the multiplication unit overlap during computation, the exponential unit computes the exponential in an on-line basis and the logarithm unit and the multiplication unit compute the logarithm and the product in a most-significant digit first basis. According to one particular embodiment, as shown in FIG. 2, the architecture of the apparatus comprises a reciprocal look-up table unit, a high radix (r = 2$^b$, b≥1) logarithm unit, a LRCF multiplier, a conversion unit, and a high radix exponential unit. In an alternative embodiment, the architecture of the apparatus comprises a word length barrel shifter unit, a high-radix reciprocal unit, a high radix logarithm unit, a high-radix multiplier, a conversion unit, and a high-radix exponential unit. FIG. 2 shows the block diagram of the apparatus for computing X$^Z$ according to one embodiment. Single thick lines represent long-word operands (around n bits), single thin lines represent short-word operands (around b; r=2$^b$ radix or $n_{Ex}$ bits), and double lines represent redundant signed high radix-r digits in a borrow-save format. This results in a conversion of signed radix-r digits. Moreover, a borrow-save adder can be implemented as a carry-save adder. FIG. 1 shows sequence of operations to compute the powering function X$^Z$ with a fixed-point exponent according to one embodiment. For the purposes of illustration, the apparatus is shown for the powering and root computation with a fixed-point exponent and a generic radix r=2$^b$. For a specific embodiment, the number X is represented in a simple or double precision floating-point form according the standard IEEE-754

## B. Method for a Fixed-Point Exponent

According to one embodiment, the computing of Z-th powering or Z-th roots in a hardware processor comprises: (a) setting a first memory element of the processor to a number X, wherein X is a number whose Z-th powering or Z-th root is to be computed; (b) setting a second memory element of the processor to a number Z, wherein Z is a fixed-point number that indicates the powering or root exponent; (c) setting a third memory element of the processor to the number of significant bits of the number X and of the resulting computation; (d) setting a fourth memory element of the processor to the operation being performed, Z-th powering or Z-th root; (e) setting a fifth memory element to the former exponent of Z; (f) computing the reciprocal of the number Z resulting in a number A; (g) computing the logarithm base 2 of the number X resulting in a number B; (h) computing the product of the numbers A and B resulting in a number C; (i) separating the integer and fractional parts of the number C; and (j) computing the exponential of the number C. In a particular embodiment, the computing of the exponential and the computing of the product are overlapped, the computing of the product and the computing of the logarithm are overlapped, the number X is represented in a simple or double precision binary floating-point form according the standard IEEE-754, and the processor in chosen from the group consisting of an integrated circuit, a FPGA device, a microprocessor, a microcontroller, a DSP, a GPU, and a general purpose processor.

According to a particular embodiment, and without limitation, the method is derived as follows

$$X^Z = 2^{\log_2(X^Z)} = 2^{Z \times \log_2 X} \qquad\qquad (1)$$

considering that X is a floating-point operand this equation can be rewritten as

$$X^Z = 2^{Z \times \log_2 M_x \times 2^{E_x}} = 2^{Z \times S} \qquad (2)$$

where $S=E_x+log_2M_x$ is the concatenation of the digits of $E_x$ (integer value) and $log_2(M_x) \in [0,1)$.

According to equation (2), $X^Z$ can be calculated as a sequence of operations: (1) logarithm of the significand $M_x(log_2(M_x) \in [0,1))$, (2) addition of $E_x$ and $log_2M_x$ (concatenation of binary strings), (3) multiplication by Z, of the result of (2) and (4) exponential of the result of the multiplication. For an efficient implementation, the operations involved must be overlapped. This requires a left-to-right most-significant digit first (MSDF) mode of operation and the use of a redundant representation. A radix-r signed-digit representation with a maximally redundant digit set {-(r-1), ... , 0, ... (r-1)} is employed.

A potential limitation of the method above for certain applications is the range of the exponential function $2^{Z \times S}$. Digit-recurrence exponential algorithms require the argument to be in the interval (-1, 1), while $Z \times S$ must be out of the range. To extend the range of convergence and guarantee the convergence of the algorithm, the integer and fractional parts of $Z \times S$ must be extracted serially and equation (2) must be rewritten,

$$X^Z = 2^{Z \times S} = 2^{\text{int}(Z \times S)} 2^{frac(Z \times S)} \qquad (3)$$

being $int(ZxS)$ and $frac(ZxS)$ the integer and fractional parts of ZxS, respectively. Therefore, according to equation (3) and considering $F=X^Z=M_fx2^{E_f}$, the significand $M_f$ and the exponent $E_f$ of $X^Z$ are

$$M_f = 2^{frac(ZxS)} \qquad (4)$$

$$E_f = \text{int}(Z \times S) \qquad (5)$$

The argument of the exponential $2^{frac(ZxS)}$ is now in (-1, 1). The number of integer bits of $Z \times S$ is larger for $X^y$ than for $X^{1/y}$. In case of root extraction, the number of integer bits depends only on $E_x$; but in powering depends moreover on y.

According to one embodiment, the sequence of operations is as follows:

1. Evaluation of $Z=(-1)^{sy} \times 1/|y|$ (only if root is being extracted, module REC in FIG. 1, being $s_y$ the sign of *y*. For practical cases, a low precision value for |y| is enough and a lookup table (LUT) is preferable for the computation of 1/|y|. Therefore, a LUT of $n_y$ inputs and $n_z$ outputs ($n_z$ fractional bits, non-redundant binary representation), is used.

2. Evaluation of the logarithm L=$log_2M_x \in [0, 1)$ to a precision of $n_l$ bits using a high-radix digit-recurrence algorithm. The logarithm is in a signed-digit radix r representation. Note that, as the logarithm in the powering function needs one more stage than in root extraction, the first stage is skipped in case of root extraction.

3. Multiplication T = Z x S. Operand $S = E_x + L = \sum_{i=-\lceil (n_{Ex-1})/b \rceil+1}^{\lceil n_l/b \rceil} S_i r^{-i}$ is obtained by concatenating the digits of $E_x$ (integer digits), recoded to a signed-digit radix r representation, and L (fractional digits). The multiplication is evaluated using a LRCF (left-to-right carry-free) multiplier.

4. Serial extraction of the integer $int(T)$ and fractional $frac(T)$ parts of $T$, and on-line conversion of $int(T)$ to a non-redundant representation. Note that the number of integer digits depends on the operation and one cycle is required to obtain each one. Hence, the number of integer digits is $\lceil (n_{Ex} -1)/b \rceil$ for root extraction.

5. On-line high-radix exponential $2^{frac(T)} \in (0.5, 2)$ with $frac(T) \in (-1, 1)$, precision of $n_e$ bits, and on-line delay $\delta=2$.

The number of stages of the logarithm and the multiplication are different for powering and root extraction; in fact, from the error analysis it is obtained that, in this case, the calculation of the powering function needs one more logarithm and multiplication stage than the root extraction. In order to accommodate these two different data paths, with different number of stages for logarithm and multiplication, and different number of integer digits, several multiplexers has been placed in the first stage in the processor of FIG. 1.

The number of digits in the integer part is $\lceil (n_{Ex} -1)/b \rceil+1$ for powering and $\lceil (n_{Ex} -1)/b \rceil$ for root extraction. Since root extraction needs to compute Z= 1/y, the number of cycles required to obtain the integer part of both algorithms is

the same, $\lceil(n_{Ex}-1)/b\rceil+1$. Consequently, the total latency is given by

$$N = \left( \lceil (n_{Ex} - 1)/b \rceil + 1 \right) + (\delta + 1) + N_e \qquad (6)$$

where $N_e = \lceil n_e/b \rceil$ is the latency of the exponential $2^{frac(T)}$.

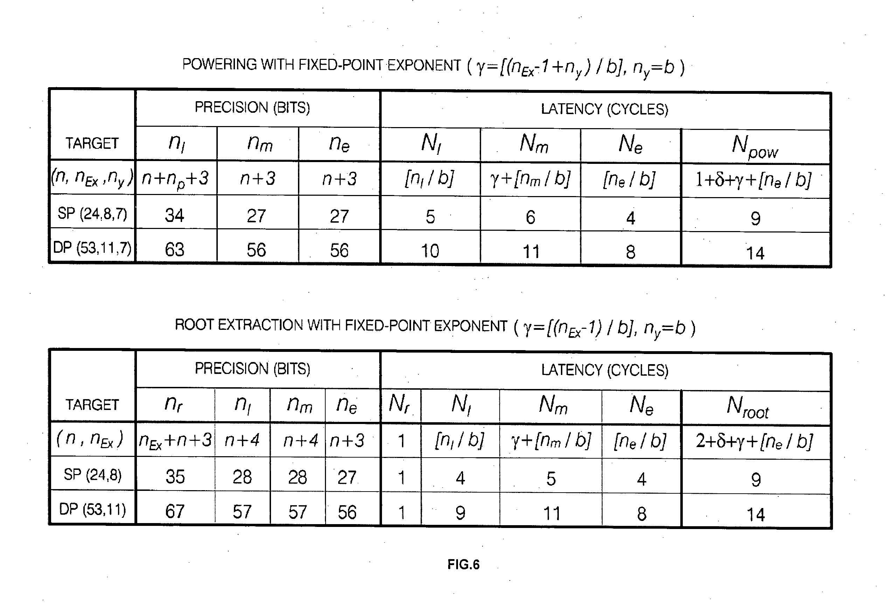

To provide faithfully rounded powering and root extraction, the rounded result must be within 1 ulp of the exact result. Assuming rounding to the nearest even, The required precision and minimum latency values for each intermediate operation and the latency for the complete operation are shown in the Table of FIG. 6. These values are provided for single (SP) and double (DP) precision with r=128.

**C. Apparatus for Fixed-Point and Floating-Point Exponents**

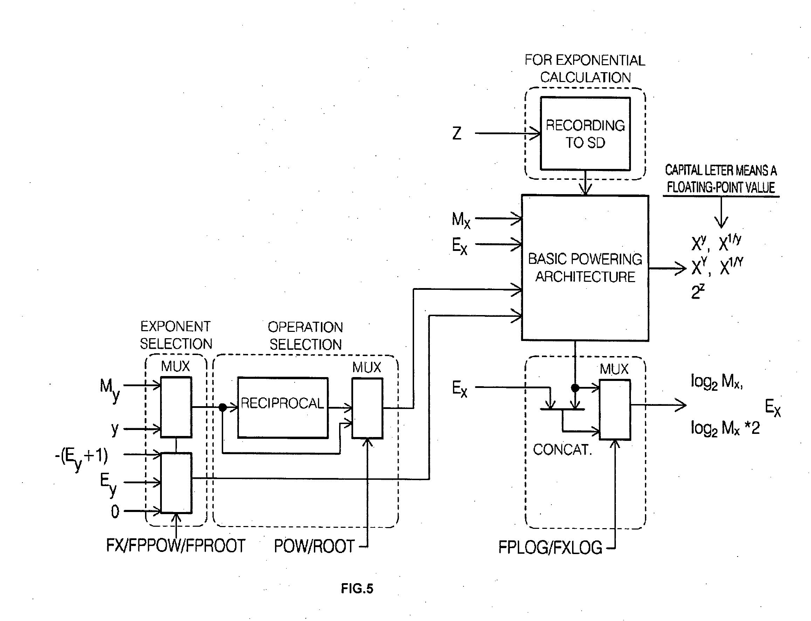

According to a particular embodiment, and without limitation, the apparatus for computing Z-th powering or Z-th root of a number X comprises: (a) a plurality of memory elements such as registers for storing number X whose Z-th powering or Z-th root is to be computed, a floating-point or fixed-point number Z that indicates the powering or root exponent, the number of significant bits of the number X and of the resulting computation, the operation being performed, Z-th powering or Z-th root and the former exponent of Z; (b) a reciprocal unit for computing the reciprocal of Z resulting in a number A; (c) a logarithm unit for computing the logarithm base 2 of the number X resulting in a number B; (d) a shifter unit for shifting the number B in case of Z being a floating-point number, resulting in a number B' (e) a multiplication unit for computing the product of said numbers A and B or B' resulting in a number C; and (f) an exponential unit for computing the exponential of said number C. In particular embodiments, the reciprocal unit operates in parallel with the logarithm unit, the logarithm unit and the multiplication unit overlap during computation, the exponential unit computes the exponential in an on-line basis, the logarithm unit computes the logarithm in a most-significant digit first basis, the shifting is computed in a most-significant-digit first basis, and/or the multiplication unit computes the product in a most-significant-digit first basis. According to one particular embodiment, the architecture of the apparatus comprises an exponent selection unit, an operation selection unit, a reciprocal look-up table unit, a high radix logarithm unit, a LRCF multiplier, a conversion unit, and a high radix exponential unit. In an alternative embodiment, the architecture of the apparatus comprises a word-length barrel shifter unit, a high-radix reciprocal unit, a high-radix logarithm unit, a high-radix multiplier, a conversion unit, and a high-radix exponential unit. FIG. 5 shows the block diagram of the apparatus for computing $X^Z$ for general exponents. For a specific embodiment, the number X is represented in a simple or double precision floating-point form according the standard IEEE-754

**D. Method for a Floating-Point Exponent**

According to one embodiment the computing of Z-th powering or Z-th roots in a hardware processor comprises: (a) setting a first memory element of the processor to a number X whose Z-th powering or Z-th root is to be computed; (b) setting a second memory element of the processor to a fixed-point number or a floating-point number Z that indicates the powering or root exponent; (c) setting a third memory element of the processor to the number of significant bits of the number X and of the resulting computation; (d) setting a fourth memory element of the processor to the operation being performed, Z-th powering or Z-th root; (e) setting a fifth memory element to the former exponent of Z; (f) computing the reciprocal of the number Z resulting in a number A; (g) computing the logarithm base 2 of the number X resulting in a number B; (h) shifting the number B, in case Z is a floating point number resulting in a number B'; (i) computing the product of the number A and B or B' resulting in a number C; (j) separating the integer and fractional parts of the number C; and (k) computing the exponential of the number C, thus obtaining the operation result. In a particular embodiment, the computing of the exponential and the computing of the product are overlapped, the computing of the product and the computing of the logarithm are overlapped, the number X is represented in a simple or double precision binary floating-point form according the standard IEEE-754, and the processor in chosen from the group consisting of an integrated circuit, a FPGA device, a microprocessor, a microcontroller, a DSP, a GPU, and a general purpose processor.

According to one embodiment the function to be computed is $X^Y$ or $X^{1/Y}$, being $X$ and Y floating-point numbers, $X = (-1)^{s_x} \times M_x \times 2^{E_x}$ and $Y = (-1)^{s_y} \times M_y \times 2^{E_y}$. Replacing the exponent in equation (1) by a floating-point exponent Y,

$$|X|^Y = 2^{(-1)^{s_y} \times M_y \times \log_2|X| \times 2^{E_y}} \qquad (7)$$

Similarly,

$$|X|^{1/Y} = 2^{(-1)^{s_y} \times (1/M_y) \times \log_2|X| \times 2^{-E_y}} \qquad (8)$$

In order to use the same multiplier for both operations, $1/M_y \in (0.5, 1]$ is normalized in $[1, 2)$; then

$$|X|^{1/Y} = 2^{(-1)^{s_y} \times (2/M_y) \times \log_2|X| \times 2^{-(E_y+1)}} \qquad (9)$$

As for the fixed-exponent case, to guarantee the convergence of the algorithm, the integer and fractional parts are extracted serially,

$$|X|^Z = \dot{M}_f \times 2^{E_f} = 2^{frac(T)} \times 2^{int(T)} \qquad (10)$$

Being Z=Y or Z=1/Y and $T = \begin{cases} (-1)^{s_y} \times M_y \times \log_2 |X| \times 2^{E_y} \\ (-1)^{s_y} \times (2/M_y) \times \log_2 |X| \times 2^{-(E_y+1)} \end{cases}$

for powering and root extraction, respectively.

The sequence of operations is: (1) reciprocal $1/M_y$ for root extraction, (2) evaluation of $L=\log_2 |X|$, (3) shifting of the result of the logarithm, $L \times 2^{E_y}$, (4) multiplication by $M_y$ or $1/M_y$ and (5) online exponential.

According to one embodiment, the sequence of operations comprises:

1- Evaluation of $R = (1/M_y) \times 2$, only in case of root extraction, by means of a digit recurrence algorithm. The latency is $N_r = \lceil n_r/b \rceil$ for $n_r$ bits of accuracy.

2- Computation of $L=\log_2|X|$. The logarithm is computed as $L = E_x + \log_2 M_x$ digit-by-digit. To ensure the convergence of the algorithm, arguments $E_x$ and $M_x$ are slightly modified. To reduce the number of iterations, the number of leading zeros/ones, $I_x$, in $frac|M_x|$, is estimated and the $K = \lfloor (I_x-1)/b \rfloor$ first iterations are skipped. In contrast, an initial iteration (range reduction) is needed to compute the different variables. In the first cycle, the leading zeros/ones of the fractional and integer parts of L, $I_x$ and $I_{Ex}$ respectively, are obtained by using Leading-Zero detectors (LZD) or Leading-One detectors (LOD), which allow the computation of the number of skipped iterations K and the number of zero digits of the integer part $K_{Ex}$. After that, the logarithm is computed with $n_l=n+n_{Ex}+6+b$ precision bits; this requires $N_l=\lceil (n+n_{Ex}+6)/b \rceil+1$ iterations.

3- Shifting L by $2^{E_y}$, $S=L \times 2^{E_y}$. The shift implementation is described in D.1 section.

4- On-line left-to-right carry-free multiplication $T=M_y \times S$ or $T=(1/M_y) \times S$, depending on the operation being computed, starting in cycle 5 with on-line delay $\delta_m=1$. The adequate operand for the multiplication must be selected, and in the case of standalone powering implementation the on-line delay $\delta_m$ is zero. An additional most significant digit To is computed for detecting overflow ($T_0 \neq 0$ for overflow).

5- On-line exponential $2^{frac(T)}$, starting in cycle 7, because the on-line delay of the exponential is $\delta=2$;

The latency of the method is $5 + \gamma + \delta_m + \delta + N_e$, where $\delta=2$, $\delta_m=1$ (for q-th root and the combined operation), $\gamma = \lceil (n_{Ex}-1)/b \rceil$ and $N_e$ is the latency of the exponential operation.

Shifts $2^{E_y}$ and $2^{-(E_y+1)}$ impose a limitation to the range of supported Y values (i.e., the shift cannot produce either a result larger than the maximum or lower than the minimum representable floating-point number). According to one embodiment, the practical range of $E_y$ for powering is limited to

$$-(n_{E_x} + n_m) \leq E_y \leq n + n_{E_x} - 2 \qquad (11)$$

In the case of root extraction, the practical range of Ey is limited to

$$-(n + n_{E_x} - 1) \leq E_y \leq n_{E_x} + n_m + 1 \qquad (12)$$

Consequently, $-69 \le E_y \le 61 - 62 \le E_y \le 70$ and $-37 \le E_y \le 29 - 30 \le E_y \le 38$ for powering (root extraction) in double-precision and single-precision floating-point representation, respectively.

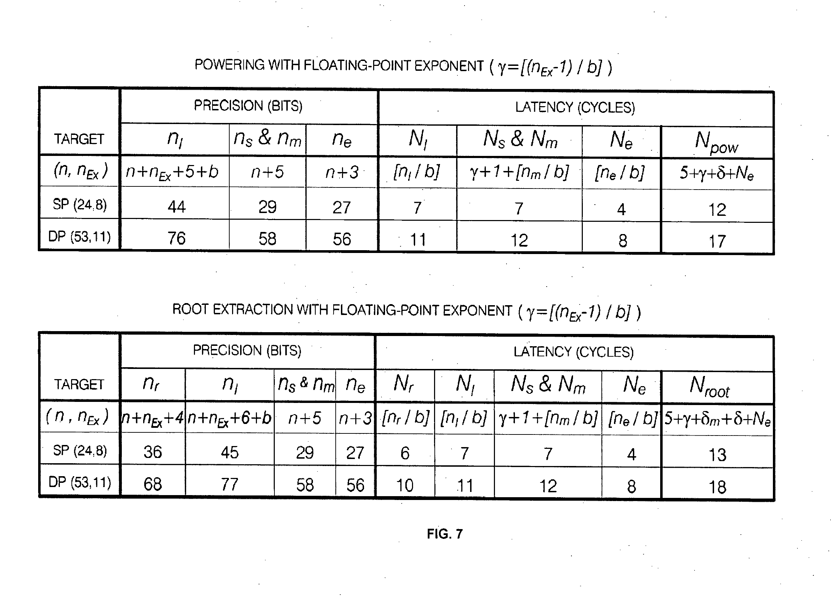

To provide faithfully rounded powering and root extraction, the rounded result must be within 1 ulp of the exact result. Assuming rounding to the nearest even, the required precision and minimum latency values for each intermediate operation and the latency for the complete operation are shown in the Table of FIG. 7. These values are provided for single (SP) and double (DP) precision with r=128.

*D.1 Shifting Method*

The computation of the powering and the generic root, in the method operating with fixed-point exponents and with floating-point exponents, requires the shifting of $L = E_x + \log_2 M_x$ by $E_y$, in case of powering or by $-(E_y + 1)$, in case of root extraction. In both cases, the shift amount can be positive or negative.

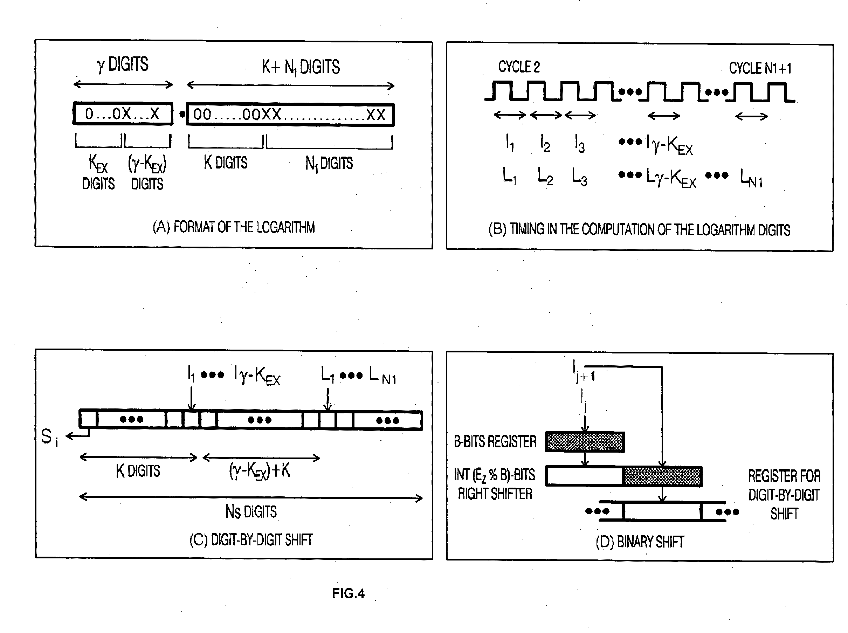

To simplify the presentation of the shifting method, we consider a shift by $E_z$, with $E_z = E_y$ for powering, and $E_z = -(E_y + 1)$ for root extraction. FIG. 4(A) shows the format of the $L = E_x + \log_2 M_x$. Due to the addition of $E_x$, there is an integer part $\gamma = |n_{Ex} - 1/b|$ radix-r digits, the leading $K_{Ex}$ of which are zeros. If $K_{EX} = \gamma$, *then* the integer part of $L$ is zero, $\llcorner L=0 \lrcorner$, which corresponds to the cases (1) $E_x = 0$ with $L \in [0,1)$ and (2) $E_x = -1$ with $L \in (-1, 0)$ (i.e., the case $M_x=1$, $E_x=-1$($X=0.5$, $L=-1$) is filtered out since its evaluation is straightforward). The fractional part has $K = \llcorner (I_x - 1)/b \lrcorner$ radix-r leading zeros followed by $N_l$ digits, where $I_x$ is the number of consecutive most-significant 0 or 1 of the fractional part of $M_x$. The non-zero radix-r digits of the integer and fractional parts are denoted $I_1,...,I_{\gamma\text{-}K_{Ex}}$ and $L_1,..., L_{N_l}$, respectively (i.e., the leading zeros of the logarithm are skipped over during its computation; then, these digits are not computed but are represented in the figure for a better comprehension of the shifting).

The digits of the logarithm are computed serially, most significant digit first, and the digits of the integer and fractional parts are obtained in parallel, as shown in FIG. 4(B).

The $E_z$-bit left or right shift is implemented as a right shift: as the leading zeros/ones are not computed, the first non-zero digit of the integer and fractional parts of $L$ are obtained simultaneously in cycle 2; this is equivalent to prealign L by placing its $K_{Ex}+1$ (if there is a non-zero integer part) or $\gamma + K + 1$ (if the integer part is zero) digits to the left, the possible maximum left shift.

The shift is split in two parts: (1) a right shift of $(K_{Ex}, +1)-\llcorner E_z/b \lrcorner$ or $(K + \gamma + 1)-\llcorner E_z/b \lrcorner$ radix-r digits and (2) a binary right shift of $E_z\%b$ bits. The digit-by-digit shift is carried out in a displacement register with $N_s$ radix-b digits (FIG. 4(C)), where $N_s$ is roughly equal to $N_l$ (in interest cases $N_s = N_l$). All the integer digits $I_j$ enter at the same position of the register but in consecutive cycles. The same for the fractional digits $L_j$. On the other hand, digit $L_j$ enters $(\gamma - K_{Ex}) + K + 1$ positions to the right of digit $I_j$. The digits are left shifted out, one digit every cycle.

The position where the $I_j$ digits input the register is determined in terms $K_{Ex}$ and $E_y$. Two different cases are identified:

1. The integer part is different from zero, $\gamma \ne K_{Ex}$, which corresponds to $|E_x| > 1$. The maximum allowed left shift in L is $K_{Ex}$. Then, digits $I_j$ input the register in position $K_{Ex} -\llcorner E_z/b \lrcorner +1$ and the output of the register has $K_{Ex} -\llcorner E_y/b \lrcorner$ leading zeros/ones digits.

2. The integer part is zero, $\gamma = K_{Ex}$ which corresponds to $E_x = 0$ or $E_x=-1$. The maximun allowed left shift in L is $\gamma+K$. Then, the $L_j$ digits are introduced at position $\gamma+K+1-\llcorner E_z/b \lrcorner$. Once the digits have been shifted out, there are $\gamma + K - \llcorner E_z/b \lrcorner$ leading zeros/ones digits in S.

Therefore, the shifted logarithm S has $N_S \le N_l + 1$ digits. The most significant digit $S_0$ is for detecting overflow (if $T_0 = S_0 \times M_z \ne 0$ or $E_z > E_{zmax}$, then the result overflows), the following y radix-r digits correspond with the integer part of the shifted logarithm and the remaining $K+N_l$ radix-r digits correspond with the fractional part. The binary shift of $E_z\%b$ bits is carried out by introducing digits $I_j$ and $I_{j+1}$ together in a b-bits right shifter register and discarding the b most significant bits, as shown in FIG. 4(D).

## Claims

1. A hardware processor for general computing $X^y$ and $X^{1/y}$, wherein X is a floating point number and Y is a floating-point exponent, $X = (-1)^{s_x} \times M_x \times 2^{E_x}$ and $Y = (-1)^{s_y} \times M_y \times 2^{E_y}$, comprising:

   a. a reciprocal calculation unit that computes $2/M_y$;
   b. a logarithmic unit that computes the value $L=\log_2|X|$, wherein the logarithm is calculated as $L=E_x+\log_2 M_x$;
   c. a shift unit that shifts L by $2^{E_y}$ in the case of powering operation or by $2^{-(E_y+1)}$ in the case of root extraction, obtaining as a result S;

d. a multiplier unit that computes the product $T = S \times 2/M_y$ in the case of root extraction and $T = S \times M_y$ in the case of powering operation; and

e. an exponential calculus unit which computes the value of fract(T), wherein frac indicates fractional part, which is the result of the powering or root operation.

2. The processor, according to claim 1, wherein the shift unit operates in left-right most significand digit first mode (MSDF).

3. The processor, according to claim 2, wherein the shift unit for the right or left shift of the logarithm, which has an integer part of $\gamma = \lceil (n_{E_x} - 1)/b \rceil$ radix-r digits, wherein $r = 2^b$ is the radix and $n_{E_x}$ is the number of bits of the exponent, of which $K_{E_x}$ are left zeros, and a fractional part having $K = \lfloor (I_x - 1)/b \rfloor$ left zeros followed by $N_I$ digits, wherein $I_x$ is the number of consecutive 0 or 1 most significand of the fractional part of $M_x$, comprising:

   a. a right shifter of $(K_{E_x} + 1) - \lfloor E_z/b \rfloor$ digits in radix-r when the integer part of the logarithm is non-zero, $\gamma \neq K_{E_x}$, or of $K + y + 1 - \lfloor E_z / b \rfloor$ digits in radix-r when the integer part of the logarithm is zero, $\gamma = K_{E_x}$; and

   b. binary right shifter of $E_z \% b$ bits.

4. The processor, according to claim 1, wherein X and Y are numbers represented in IEEE-754 standard.

5. A method for computing Y-th powering of Y-th root of a number X, $X^Y$ or $X^{1/Y}$, in a hardware processor, being X and Y floating point numbers, $X = (-1)^{s_x} \times M_x \times 2^{E_x}$ and $Y = (-1)^{S_y} \times M_y \times 2^{E_y}$, comprising:

   a. calculate $2/M_y$;

   b. calculate $L = \log_2 |X|$;

   c. shift L by $2^{E_z}$, being $E_z = E_y$ in powering calculation and $E_z = -(E_y + 1)$ in root computation, obtaining a value S;

   d. multiply in on-line basis without left-right carry the terms $M_y \times S = T$, when a powering operation is carried out, or $(2/M_y) \times S = T$, when a root operation is carried out;

   e. separate the integer part and the fractional part of T; and

   f. on-line calculation of $2^{fraxt(t)}$, frac indicates fractional part, which is the result of the powering or root operation.

6. The method, according to claim 5, wherein the shift is carried out in left-right most significand digit first mode.

7. The method, according to claim 6, wherein the right or left shift of the logarithm, having a integer part of $\gamma = \lceil (n_{E_x} - 1)/b \rceil$ radix-r digits, wherein $r = 2^b$ is the radix, of which $K_{E_x}$ are left zeros, and a fractional part having $K = \lfloor (I_x - 1)/b \rfloor$ left zeros followed by $N_I$ digits, wherein $I_x$ is the number of consecutive 0 or 1 most significand of the fractional part of $M_x$, comprising:

   a. right shift of $(K_{E_x} + 1) - \lfloor E_z/b \rfloor$ digits in radix-r, when the integer part of the logarithm is nonzero, $\gamma \neq K_{E_x}$, or a right shift of $(K + \gamma + 1) - \lfloor E_z/b \rfloor$ digits in radix-r when the integer part of the logarithm is zero, $\gamma = K_{E_x}$; and

   b. carry out a binary right shifting of $E_z \% b$ bits.

8. The method, according to claim 5, wherein X and Y are numbers represented in IEEE-754 standard.

FIG. 1

FIG.2

EP 2 884 403 A1

FIG.3

EP 2 884 403 A1

(B) TIMING IN THE COMPUTATION OF THE LOGARITHM DIGITS

(D) BINARY SHIFT

(A) FORMAT OF THE LOGARITHM

(C) DIGIT-BY-DIGIT SHIFT

FIG.4

FIG.5

POWERING WITH FIXED-POINT EXPONENT ( $\gamma=[(n_{Ex}\text{-}1+n_y)\,/\,b]$, $n_y=b$ )

| TARGET | PRECISION (BITS) | | | LATENCY (CYCLES) | | | |
|---|---|---|---|---|---|---|---|
| | $n_l$ | $n_m$ | $n_e$ | $N_l$ | $N_m$ | $N_e$ | $N_{pow}$ |
| $(n, n_{Ex}, n_y)$ | $n+n_p+3$ | $n+3$ | $n+3$ | $[n_l\,/\,b]$ | $\gamma+[n_m\,/\,b]$ | $[n_e\,/\,b]$ | $1+\delta+\gamma+[n_e\,/\,b]$ |
| SP (24,8,7) | 34 | 27 | 27 | 5 | 6 | 4 | 9 |
| DP (53,11,7) | 63 | 56 | 56 | 10 | 11 | 8 | 14 |

ROOT EXTRACTION WITH FIXED-POINT EXPONENT ( $\gamma=[(n_{Ex}\text{-}1)\,/\,b]$, $n_y=b$ )

| TARGET | PRECISION (BITS) | | | | LATENCY (CYCLES) | | | | |
|---|---|---|---|---|---|---|---|---|---|
| | $n_r$ | $n_l$ | $n_m$ | $n_e$ | $N_r$ | $N_l$ | $N_m$ | $N_e$ | $N_{root}$ |
| $(n, n_{Ex})$ | $n_{Ex}+n+3$ | $n+4$ | $n+4$ | $n+3$ | 1 | $[n_l\,/\,b]$ | $\gamma+[n_m\,/\,b]$ | $[n_e\,/\,b]$ | $2+\delta+\gamma+[n_e\,/\,b]$ |
| SP (24,8) | 35 | 28 | 28 | 27 | 1 | 4 | 5 | 4 | 9 |
| DP (53,11) | 67 | 57 | 57 | 56 | 1 | 9 | 11 | 8 | 14 |

FIG.6

EP 2 884 403 A1

POWERING WITH FLOATING-POINT EXPONENT ( $\gamma=[(n_{Ex}-1)/b]$ )

| TARGET | PRECISION (BITS) | | | LATENCY (CYCLES) | | | |
|---|---|---|---|---|---|---|---|
| | $n_l$ | $n_s$ & $n_m$ | $n_e$ | $N_l$ | $N_s$ & $N_m$ | $N_e$ | $N_{pow}$ |
| $(n, n_{Ex})$ | $n+n_{Ex}+5+b$ | $n+5$ | $n+3$ | $[n_l/b]$ | $\gamma+1+[n_m/b]$ | $[n_e/b]$ | $5+\gamma+\delta+N_e$ |
| SP (24,8) | 44 | 29 | 27 | 7 | 7 | 4 | 12 |
| DP (53,11) | 76 | 58 | 56 | 11 | 12 | 8 | 17 |

ROOT EXTRACTION WITH FLOATING-POINT EXPONENT ( $\gamma=[(n_{Ex}-1)/b]$ )

| TARGET | PRECISION (BITS) | | | | LATENCY (CYCLES) | | | | |
|---|---|---|---|---|---|---|---|---|---|
| | $n_r$ | $n_l$ | $n_s$ & $n_m$ | $n_e$ | $N_r$ | $N_l$ | $N_s$ & $N_m$ | $N_e$ | $N_{root}$ |
| $(n, n_{Ex})$ | $n+n_{Ex}+4$ | $n+n_{Ex}+6+b$ | $n+5$ | $n+3$ | $[n_r/b]$ | $[n_l/b]$ | $\gamma+1+[n_m/b]$ | $[n_e/b]$ | $5+\gamma+\delta_m+\delta+N_e$ |
| SP (24,8) | 36 | 45 | 29 | 27 | 6 | 7 | 7 | 4 | 13 |
| DP (53,11) | 68 | 77 | 58 | 56 | 10 | 11 | 12 | 8 | 18 |

FIG. 7

# INTERNATIONAL SEARCH REPORT

| International application No. |
| --- |
| PCT/ES2013/070586 |

**A. CLASSIFICATION OF SUBJECT MATTER**

*G06F17/10* (2006.01)

According to International Patent Classification (IPC) or to both national classification and IPC

**B. FIELDS SEARCHED**

Minimum documentation searched (classification system followed by classification symbols)
G06F

Documentation searched other than minimum documentation to the extent that such documents are included in the fields searched

Electronic data base consulted during the international search (name of data base and, where practicable, search terms used)

EPODOC, INVENES, WI, Inspec, Internet

**C. DOCUMENTS CONSIDERED TO BE RELEVANT**

| Category* | Citation of document, with indication, where appropriate, of the relevant passages | Relevant to claim No. |
| --- | --- | --- |
| A | Vazquez, A. et al: "Composite Iterative Algorithm and Architecture for q-th Root Calculation," Computer Arithmetic (ARITH), 2011 20th IEEE Symposiumon , vol., no., pp.52-61, 25-27 July 2011. doi:10.1109/ARITH.2011.16. the whole document. | 1-8 |
| A | Pineiro, J.-A. et al. "Algorithm and architecture for logarithm, exponential,and powering computation," Computers, IEEE Transactions on , vol.53, no.9, pp. 1085- 1096, Sept. 2004. doi:10.1109/TC.2004.53 .the whole document. | 1-8 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 17/01/2014 | **(22/01/2014)** |

| Name and mailing address of the ISA/ | Authorized officer |
| --- | --- |
| OFICINA ESPAÑOLA DE PATENTES Y MARCAS Paseo de la Castellana, 75 - 28071 Madrid (España) Facsimile No.: 91 349 53 04 | M. Alvarez Moreno Telephone No. 91 3495495 |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **N. TAKAGI.** Powering by a Table Look-Up and a Multiplication with Operand Modification. *IEEE Transactions on Computers,* November 1998, vol. 47 (11), 1216-1222
- **J. A. PIÑEIRO ; J. D. BRUGUERA ; J. M. MULLER.** Faithful Powering Computation Using Table Lookup and Fused Accumulation Tree. *Proceedings 15th IEEE Symposium on Computer Arithmetic,* June 2001, 40-47
- **J. CAO ; B. W. Y. WEI ; J. CHENG.** High-performance architectures for elementary function generation. *Proceedings 15th IEEE Symposium on Computer Arithmetic,* June 2001, 136-144
- **P. MONTUSCHI ; J. D. BRUGUERA ; L. CIMINIERA ; J. A. PIÑEIRO.** An Digit-by-Digit Algorithm for m-th Root Extraction. *IEEE Transactions on Computers,* December 2007, vol. 56 (12), 1696-1706

- **A. PIÑEIRO ; J. D. BRUGUERA ; F. LAMBERTI ; P. MONTUSCHI.** A Radix-2 Digit-by-Digit Architecture for Cube Root. *IEEE Transactions on Computers,* April 2008, vol. 57 (4), 562-566
- **M. D. ERCEGOVAC.** Digit-by-Digit Methods for Computing Certain Functions. *41st Asilomar Conference on Signals, Systems and Computers,* November 2007, 338-342
- **N. TAKAGI.** A Digit-Recurrence Algorithm for Cube Rooting. *IEICE Transactions on Fundamentals of Electronics, Communications and Computer Sciences,* May 2001, vol. E84-A (5), 1309-1314
- **J. A. PIÑEIRO ; M. D. ERCEGOVAC ; J. D. BRUGUERA.** Algorithm and Architecture for Logarithm, Exponential and Powering Computation. *IEEE Transactions on Computers,* September 2004, vol. 53 (9), 1085-1096